# EUROPÄISCHE PATENTANMELDUNG

(11) **EP 3 244 272 A1**
(43) Veröffentlichungstag der Anmeldung: **15.11.2017**
(21) Anmeldenummer: 16168700.9
(22) Anmeldetag: 09.05.2016
(51) Int. Cl.: G05B 19/042

(54) **VERFAHREN ZUR ÜBERWACHUNG EINER KONDENSATOR-DRUCKSCHUTZKURVE MIT POLYGONFUNKTION**

(71) Anmelder: Siemens Aktiengesellschaft, 80333 München (DE)
(72) Erfinder: Pahl, Andreas, 40589 Düsseldorf (DE); Görtz, Michael, 45131 Essen (DE)

(57) **Zusammenfassung**

Die Erfindung betrifft ein Verfahren zur Überwachung einer Kondensator-Druckschutzkurve mit Polygonfunktion einer Turbine mit einer SPS-Sicherheitsüberwachung (1), mit den Schritten:
- Einlesen eines ersten Messwertes (X1) und eines zweiten Messwertes (X2),
- Normieren des zweiten Messwertes (X2) auf eine Werteskala des ersten Messwertes (X1) mit einem Normierungsmodul (2) der SPS-Sicherheitsüberwachung (1),
- Vergleichen des ersten Messwertes (X1) mit dem normierten zweiten Messwert (X2) mit einem Vergleichermodul (3) der SPS-Sicherheitsüberwachung (1) (1), und
- auf ein Überschreiten des ersten Messwertes (X1) durch den normierten zweiten Messwert (X2) hin Erzeugen eines Ausgangssignals.

## Beschreibung

Die Erfindung betrifft ein Verfahren zur Überwachung einer Kondensator-Druckschutzkurve mit Polygonfunktion. Ferner betrifft die Erfindung eine SPS-Sicherheitsüberwachung zur Durchführung eines derartigen Verfahrens und eine Turbine mit einer derartigen SPS-Sicherheitsüberwachung.

Durch die Überwachung einer Kondensator-Druckschutzkurve mit Polygonfunktion zur Überwachung eines Drucks eines Kondensators einer Turbine, wie einer Dampfturbine, wird die Betriebssicherheit erhöht.

Zur Überwachung der Kondensatordruckschutzkurve wird eine SPS-Sicherheitsüberwachung verwendet, Unter einer SPS (speicherprogrammierbare Steuerung, englisch: Programmable Logic Controller, PLC) wird dabei ein Gerät verstanden, das zur Steuerung oder Regelung einer Anlage eingesetzt und auf digitaler Basis programmiert wird.

Zur Überwachung einer Kondensator-Druckschutzkurve notwendig, eine Polygonfunktion abzubilden, die abschnittweise einen Rampenabschnitt aufweist. Jedoch weist eine SPS-Steuerung kein Modul zum Abbilden einer derartig komplexen Polygonfunktion mit einem Rampenabschnitt auf. Mit Vergleicherfunktionsblöcken einer SPS-Steuerung kann allenfalls mit einer Mehrzahl von Vergleicherblöcken eine Mehrstufenfunktion nachgebildet werden. Dies führt jedoch zu einer hohen Anzahl von Vergleicherfunktionblöcken und einer trotzdem ungenügenden Annäherung eine Polygonfunktion mit einem Rampenabschnitt.

Aufgabe der Erfindung ist es daher, einen Weg aufzuzeigen, wie mit geringem Aufwand eine Kondensator-Druckschutzkurve mit Polygonfunktion besser überwacht werden kann.

Das erfindungsgemäße Verfahren zur Überwachung einer Kondensator-Druckschutzkurve mit Polygonfunktion einer Turbine mit einer SPS-Sicherheitsüberwachung weist die Schritte auf: Einlesen eines ersten Messwertes und eines zweiten Messwertes,
Normieren des zweiten Messwertes auf eine Werteskala des ersten Messwertes mit einem Normierungsmodul der SPS-Sicherheitsüberwachung,
Vergleichen des ersten Messwertes mit dem normierten zweiten Messwert mit einem Vergleichermodul der SPS-Sicherheitsüberwachung, und
auf ein Überschreiten des ersten Messwertes durch den normierten zweiten Messwert hin Erzeugen eines Ausgangssignals.

Somit wird z.B. ein Rampenabschnitt der Polygonfunktion der Kondensator-Druckschutzkurve mit einem einfachen Vergleichermodul abgebildet, wobei der zweite Messwert den kontinuierlich sich ändernden Wert im Rampenabschnitt repräsentiert und damit den Vergleichswert in diesem Abschnitt darstellt. So kann auf überraschend einfache Weise eine Polygonfunktion mit einem Rampenabschnitt abgebildet werden.

Gemäß einer Ausführungsform wird der zweite Messwert von einem Multiplizierer des Normierungsmoduls mit einem vorbestimmten Wert multipliziert. So kann berücksichtigt werden, dass der erste Messwert und der zweite Messwert in Abhängigkeit von ihren Eingangswerten unterschiedliche Steigungen und/oder zeitliche Dynamiken aufweisen. Mit anderen Worten, der zweite Messwert wird an den ersten Messwert angepasst.

Gemäß einer weiteren Ausführungsform wird mit einem Addierer des Normierungsmoduls ein Offset aufaddiert. So kann berücksichtigt werden, dass der erste Messwert und der zweite Messwert sich durch einen Offset voneinander unterscheiden. Mit anderen Worten, der zweite Messwert wird an den ersten Messwert angepasst. Ferner kann so die Sicherheit gesteigert werden, dass durch das Aufaddieren eines Offsets eine Sicherheitsreserve berücksichtigt werden kann.

Gemäß einer weiteren Ausführungsform wird als erster Messwert ein Eingangsdruckwert der Turbine eingelesen. So wird ein besonders einfach messtechnisch zu erfassender Wert verwendet.

Gemäß einer weiteren Ausführungsform wird als zweiter Messwert ein Kondensatordruckwert der Turbine eingelesen. So wird auch ein besonders einfach messtechnisch zu erfassender Wert verwendet.

Ferner gehören zur Erfindung eine SPS-Sicherheitsüberwachung zur Durchführung eines derartigen Verfahrens und eine Turbine mit einer derartigen SPS-Sicherheitsüberwachung.
Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung einer Kondensator-Druckschutzkurve,
Fig. 2 eine schematische Darstellung eines Teils einer SPS-Sicherheitsüberwachung zur Überwachung der in Figur 1 dargestellten Kondensator-Druckschutzkurve, und
Fig. 3 eine schematische Darstellung eines weiteren Teils einer SPS-Sicherheitsüberwachung zur Überwachung der in Figur 1 dargestellten Kondensator-Druckschutzkurve.

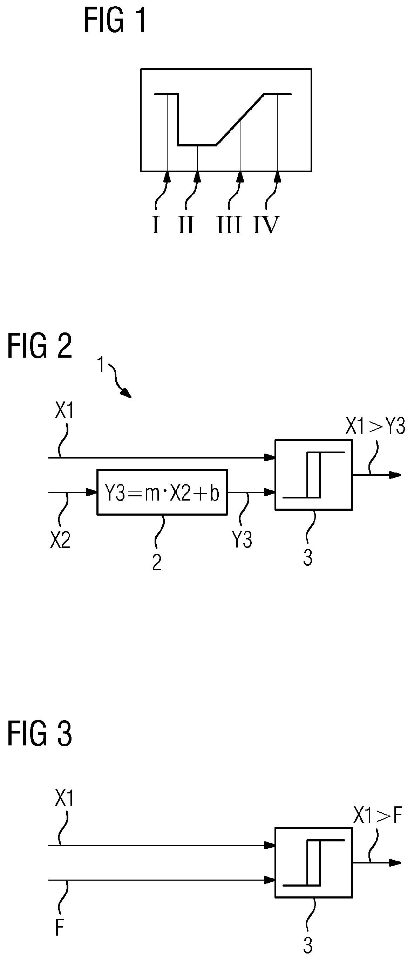

Es wird zunächst auf die Figur 1 Bezug genommen.

Dargestellt ist ein Beispiel einer Kondensator-Druckschutzkurve mit Polygonfunktion, wie z.B. zur Sicherheitsüberwachung wie einer Turbine, z.B. einer Dampfturbine Verwendung findet.

Die in Figur 1 dargestellte Kondensator-Druckschutzkurve weist einen ersten Abschnitt I mit konstantem Bereich, einen zweiten Abschnitt II mit einem zweiten konstanten Bereich, einen dritten Abschnitt III mit einem kontinuierlich ansteigenden Verlauf und einen vierten Abschnitt IV mit einem dritten konstanten Bereich. Während im ersten Abschnitt I und im vierten Abschnitt IV die Werte sich gleichen, weist der zweite Abschnitt II einen Wert auf, der kleiner als die Werte des ersten Abschnitt I und des vierten Abschnitts IV sind. Der dritte Abschnitt III hingegen stellt einen Rampenabschnitt dar, der beim Wert des zweiten Abschnitts II startet und bei Wert des vierten Abschnitts IV endet.

Es wird nun zusätzlich auf die Figur 2 Bezug genommen.

Dargestellt ist ein Teil einer SPS-Sicherheitsüberwachung 1 zum Abbilden des dritten Abschnitts III zur Überwachung der in Figur 1 dargestellten Kondensator-Druckschutzkurve.

Dieser Teil der SPS-Sicherheitsüberwachung 1 weist im vorliegenden Ausführungsbeispiel ein Normierungsmodul 2 und ein Vergleichermodul 3 als Funktionsblöcke auf.

Das Normierungsmodul 2 weist im vorliegenden Ausführungsbeispiel einen Multiplizierer zum Multiplizieren mit einem vorbestimmten Wert m und einen Addierer zum Aufaddieren eines Offsets b auf.

Die SPS-Sicherheitsüberwachung 1 und/oder das Normierungsmodul 2 und/oder das Vergleichermodul 3 weisen hierzu im vorliegenden Ausführungsbeispiel Hard- und/oder Softwarekomponenten auf.

Dem Vergleichermodul 3 wird im vorliegenden Ausführungsbeispiel als erster Messwert X1 ein Eingangsdruckwert einer Turbine zugeführt, nachdem er von der SPS-Sicherheitsüberwachung 1 eingelesen wurde, während dem Normierungsmodul 2 als zweiter Messwert X2 ein Kondensatordruckwert der Turbine eingelesen wird, nachdem er ebenfalls von der SPS-Sicherheitsüberwachung 1 eingelesen wurde.

Der Multiplizierer des Normierungsmoduls 2 multipliziert den zweiten Messwert X2 mit dem vorbestimmten Wert m, um so eine Anpassung der Steigung im rampenförmigen dritten Bereich III zu erreichen. Dann addiert der Addierer des Normierungsmodules 2 den Offsets b auf, z.B. einen Wert von 0,3 bar.

Der Ausgangswert Y3 wird dann dem Vergleichermodul 3 zugeführt. Das Vergleichermodul 3 vergleicht dann den Ausgangswert Y3 mit dem ersten Messwert X1 und liefert z.B. ein Ausgangssignal logisch Eins, wenn der erste Messwert X1 größer als der Ausgangswert Y3 ist. Andernfalls liefert das Vergleichermodul 3 ein Ausgangssignal logisch Null.

Da sich der erste Messwert X1 und der zweite Messwert X2 synchron ändern, bildet der zweite Messwert X2 nach dem Anpassen mit dem Normierungsmodul 2 eine sich permanent anpassende Grenze im rampenförmigen dritten Abschnitt III. Es wird nun zusätzlich auf die Figur 3 Bezug genommen.

Dargestellt ist ein weiterer Teil der SPS-Sicherheitsüberwachung 1 zum Abbilden des ersten Abschnitts I, des zweiten Abschnitts II oder des vierten Abschnitts IV zur Überwachung der in Figur 1 dargestellten Kondensator-Druckschutzkurve.

Dieser Teil besteht aus einem weiteren Vergleichermodul 3 als Funktionsblock, dem neben dem ersten Messwert X1 ein Festwert F zugeführt wird. Das Vergleichermodul 3 vergleicht dann den Festwert F mit dem ersten Messwert X1 und liefert z.B. ein Ausgangssignal logisch Eins, wenn der erste Messwert X1 größer als der Festwert F ist. Andernfalls liefert das Vergleichermodul 3 ein Ausgangssignal logisch Null.

Somit kann eine Kondensator-Druckschutzkurve mit Polygonfunktion sowohl in konstanten Abschnitten als auch in rampenförmigen Abschnitten mit einer SPS-Sicherheitsüberwachung mit lediglich einfachen Vergleichsmodulen abgebildet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung einer Kondensator-Druckschutzkurve mit Polygonfunktion einer Turbine mit einer SPS-Sicherheitsüberwachung (1), mit den Schritten:
- Einlesen eines ersten Messwertes (X1) und eines zweiten Messwertes (X2),
- Normieren des zweiten Messwertes (X2) auf eine Werteskala des ersten Messwertes (X1) mit einem Normierungsmodul (2) der SPS-Sicherheitsüberwachung (1), und
- auf ein Überschreiten des ersten Messwertes (X1) durch den normierten zweiten Messwert (X2) hin Erzeugen eines Ausgangssignals.

2. Verfahren nach Anspruch 1,
wobei der zweite Messwert von einem Multiplizierer des Normierungsmoduls (2) mit einem vorbestimmten Wert multipliziert wird.

3. Verfahren nach Anspruch 1 oder 2,
wobei mit einem Addierer des Normierungsmoduls (2) ein Offset (b) aufaddiert wird.

4. Verfahren nach einem der Ansprüche 1 bis 3,
wobei als erster Messwert (X1) ein Eingangsdruckwert der Turbine eingelesen wird.

5. Verfahren nach einem der Ansprüche 1 bis 4,
wobei als zweiter Messwert (X2) ein Kondensatordruckwert der Turbine eingelesen wird.

6. SPS-Sicherheitsüberwachung (1) zur Überwachung einer Kondensator-Druckschutzkurve mit Polygonfunktion einer Turbine, ausgebildet zum Einlesen eines ersten Messwertes (X1) und eines zweiten Messwert (X2), mit einem Normierungsmodul (2) zum Normieren des zweiten Messwertes (X2) auf eine Werteskala des ersten Messwertes (X1), einem Vergleichermodul (2) zum Vergleichen des ersten Messwertes (X1) mit dem normierten zweiten Messwert (X2), und ausgebildet zum Erzeugen eines Ausgangssignals auf ein erfasstes Überschreiten des ersten Messwertes (X1) durch normierten zweiten Messwert (X2) hin.

7. SPS-Sicherheitsüberwachung (1) nach Anspruch 6,
wobei das Normierungsmodul (2) einen Multiplizierer zum Multiplizieren des zweiten Messwertes (X2) mit einem vorbestimmten Wert aufweist.

8. SPS-Sicherheitsüberwachung nach Anspruch 6 oder 7,
wobei das Normierungsmodul (2) einen Addierer zum Aufaddieren eines Offsets (b) aufweist.

9. Turbine mit einer SPS-Sicherheitsüberwachung (1) nach einem der Ansprüche 6 bis 8.

10. Turbine mit einer SPS-Sicherheitsüberwachung (1) nach Anspruch 9,
wobei mit einem Kondensatordrucksensor der Turbine der zweite Messwert (X2) erfassbar ist.
